(19) **Europäisches Patentamt**

**European Patent Office**

**Office européen des brevets**

(11) Veröffentlichungsnummer: **0 075 901**
**B1**

(12) **EUROPÄISCHE PATENTSCHRIFT**

(45) Veröffentlichungstag der Patentschrift:
**26.02.86**

(21) Anmeldenummer: **82108871.3**

(22) Anmeldetag: **24.09.82**

(51) Int. Cl.⁴: **F 16 L 59/16,** F 16 L 47/02,
B 29 C 65/66

(54) **Verfahren zum Verbinden von Mantelrohren zweier isolierter Leitungselemente und Verbindungsrohr zur Durchführung des Verfahrens.**

(30) Priorität: **29.09.81 CH 6269/81**
**18.11.81 CH 7420/81**

(43) Veröffentlichungstag der Anmeldung:
**06.04.83 Patentblatt 83/14**

(45) Bekanntmachung des Hinweises auf die Patenterteilung:
**26.02.86 Patentblatt 86/9**

(84) Benannte Vertragsstaaten:
**AT BE CH DE FR GB IT LI LU NL SE**

(56) Entgegenhaltungen:
**CH - A - 585 367**
**FR - A - 2 477 668**
**GB - A - 1 483 143**
**US - A - 2 857 931**

(73) Patentinhaber: **VON ROLL AG, CH-4563 Gerlafingen
(CH)**

(72) Erfinder: **Caduff, Marcel, Finkenweg 20,
CH-4564 Obergerlafingen (CH)**
Erfinder: **Nyffeler, Heinz, Willadingenstrasse 20,
CH-4565 Recherswil (CH)**
Erfinder: **Kämpf, Hansrudolf, Ribimattweg 10,
CH-4563 Biberist (CH)**
Erfinder: **Pellikaan, Jacob, Prinses Marijkeweg 26,
Meerkerk (NL)**
Erfinder: **Krulthof, Hubertus B., Esdoornstraat 4,
Gorinchem (NL)**

(74) Vertreter: **EGLI-EUROPEAN PATENT ATTORNEYS,
Horneggstrasse 4, CH-8008 Zürich (CH)**

## Beschreibung

Die Erfindung betrifft ein Verfahren zum Verbinden von aus einem Thermoplast gefertigten Mantelrohren zweier isolierter Leitungselemente mittels eines Verbindungsrohres dessen Randteile die Enden der Mantelrohre überragen, wobei das Verbindungsrohr durch elektrische Widerstandsschweissung mit den Enden der Mantelrohre verbunden wird, sowie ein entsprechendes Verbindungsrohr.

Unter dem hier verwendeten Begriff "Leitungselemente" werden gerade und gebogene Rohrstücke sowie Formstücke aller Art, z.B. Rohrbögen, Rohrverzweigungen, Adapter, Kreuzstücke od.dgl., verstanden, die bereits bei der Herstellung mit einer Isolation und einem Mantelrohr umgeben werden.

Bei solchen Leitungselementen stellt sich die Aufgabe, die Verbindung des Mediumrohrs und der Isolation so durchzuführen, dass eine dichte Verbindung besteht. Ist das Mantelrohr aus Stahl, wird ein Verbindungsrohr aus Stahl verwendet, das über das Mantelrohr geschoben werden kann. Es werden dann zunächst die Enden der Mediumrohre verschweisst, die Isolation wiederhergestellt und dann das Verbindungsrohr über die Stossstelle geschoben und an seinen Enden mit dem Mantelrohr verschweisst.

Besteht das Mantelrohr aus Kunststoff, kann ein Verbindungsrohr aus Kunststoff verwendet und dasselbe nach dem Schweissen der Mediumrohre und nach Wiederherstellung der Isolation über diese Stelle geschoben und an seinen Enden entweder durch Warmluftschweissung oder durch Schrumpffolien mit den Mantelrohrenden verbunden werden. Mit einem Mantelrohr sowohl aus Stahl als auch aus Kunststoff ist es schwierig und zeitaufwendig, eine einwandfreie Verbindung, insbesondere in einem Rohrgraben, herzustellen. Ebenso kann die Prüfung auf Dichtheit, z.B. durch Abpressen, Röntgen- und Ultraschallprüfung, nicht oder nur mit grossen Schwierigkeiten durchgeführt werden. Andererseits ist es erforderlich, dass die Rohrverbindungen im Hinblick auf die Betriebsanforderungen absolut dicht sein müssen. Bereits geringe Feuchtigkeitsspuren im Zwischenraum zwischen den Rohren führen wegen der meistens hohen Temperaturen des im Mediumrohr fliessenden Mediums zu hohen Dampfdrükken im Zwischenraum, die eine Beschädigung der Rohrverbindung, z.B. das Abplatzen der Schrumpffolien, zur Folge haben können. Hierbei besteht die Gefahr, dass die im Zwischenraum eingebauten Leckschutzgeräte infolge des eingetretenen Druckanstiegs ansprechen, obwohl im Mediumrohr kein Leck vorhanden ist.

Es sind Rohrverbindungen für Rohrleitungen mit zwei Rohren bekannt EP-A-0029632, bei denen isolierte Leitungselemente dadurch miteinander verbunden werden, dass zunächst das Mediumrohr geschweisst und die Isolierung angebracht wird, worauf die im Mantelrohr bestehende Lücke durch schalenförmige Mantelteile ausgefüllt wird, die miteinander und mit dem Mantelrohr durch Stumpfschweissen verbunden werden. Damit wird zwar die Verwendung eines Verbindungsrohrs mit grösserem Durchmesser vermieden, jedoch ist die Schweissung mehrerer Teile, insbesondere in einem Rohrgraben, schwierig und aufwendig.

Aus der US-A-2 857 931 ist wiederum ein Verfahren bekannt, wonach der Zwischenraum zwischen zwei Mantelrohrenden ausgeschäumt wird. Zur Begrenzung der Ausschäumung wird ein Band mit einem Schlitz über den auszuschäumenden Zwischenraum gelegt.

Bei einer weiteren bekannten Rohrverbindung für isolierte Leitungselemente (CH-A-485 162) wird eine aus zwei Teilen bestehende Schale vor der Erstellung der Rohrverbindung über die Leitungsenden geschoben und nach Fertigstellen der Verbindung zusammengeschoben und miteinander verbunden. Die Verbindung mit dem Mantelrohr muss hier in gleicher Weise wie bei einem einteiligen Verbindungsrohr erfolgen und weist demnach, abgesehen von dem grösseren Aufwand für die Herstellung der zweiteiligen Schale, dieselben Nachteile auf.

Es ist auch bekannt (CH-A-396 536), zum Verbinden von gewöhnlichen Rohrenden Schweissmuffen zu verwenden, an deren Innenwandung eine Wicklung aus einem Widerstandsheizdraht angeordnet ist, wobei das Zusammenschmelzen des Materials der Muffe und der Rohrenden durch elektrische Widerstandsheizung erfolgt. Bei solchen Schweissmuffen wird jedoch der Muffenkörper selbst Teil der Leitung und muss deshalb grössere Wandstärke als die Leitungsenden aufweisen, die zu einer starren und praktisch nicht nachgiebigen Verbindung führen. Die Verwendung eines nachgiebigen Verbindungsrohrs ist jedoch für die dauernde dichte Verbindung der Enden von Mantelrohren wesentlich.

Nach der CH-A-585 367 wird nach dem Verbinden von Mediumrohren die zwischen den Enden der Mantelrohre verbleibenden Oeffnungen von einem Verbindungsrohr aus gleichem oder ähnlichem Material derart überbrückt, dass dessen Randteile die Enden der Mantelrohre überdecken. Die Verbindung erfolgt durch elektrische Widerstandsschweissung. Da jedoch häufig zwischen Verbindungsrohr und Mantelrohr Toleranzen vorkommen, ist bei einer hier erfolgten Widerstandsschweissung die Dichtheit der Verbindung nicht gewährleistet.

Der Erfindung liegt nun die Aufgabe zugrunde, ein Verfahren und ein Verbindungsrohr der eingangs beschriebenen Art so auszugestalten, dass das dichte Verbinden der Mantelrohrenden zuverlässig und mit geringem Aufwand, selbst in einem Rohrgraben, erreicht werden kann.

Diese Aufgabe wird nach dem erfindungsgemässen Verfahren dadurch gelöst, dass den Randteilen durch Aufweiten eine Schrumpfverbindung eingeprägt wird, die bei Wärmeentwicklung während der Widerstandsschweissung gelöst wird, wodurch ein sattes Anliegen der beiden Randteile auf den Enden der Mantelrohre erreicht wird.

Das Verbindungsrohr selbst soll aus einem zwischen den Randteilen liegenden Zwischenrohrstück bestehen, welches mindestens teilweise eine geringere wandstärke aufweist als die Randteile.

Die Erfindung ist in der Zeichnung in einigen Ausführungsformen dargestellt und nachfolgend beschrieben. Es zeigen:

Fig. 1 eine erste Ausführungsform einer Rohrverbindung für isolierte Leitungselemente,

Fig. 2-4 drei verschiedene Ausführungsformen der Randteile eines Verbindungsrohrs,

Fig. 5 eine Rohrverbindung, deren Mediumrohre abgewinkelt sind,

Fig. 6 eine Rohrverbindung mit exzentrischen Rohren,

Fig. 7 eine Rohrverbindung mit verschobenen Rohren,

Fig. 8 eine Rohrverbindung ähnlich derjenigen in Fig. 1 und

Fig. 9 eine weitere Ausführungsform einer Rohrverbindung.

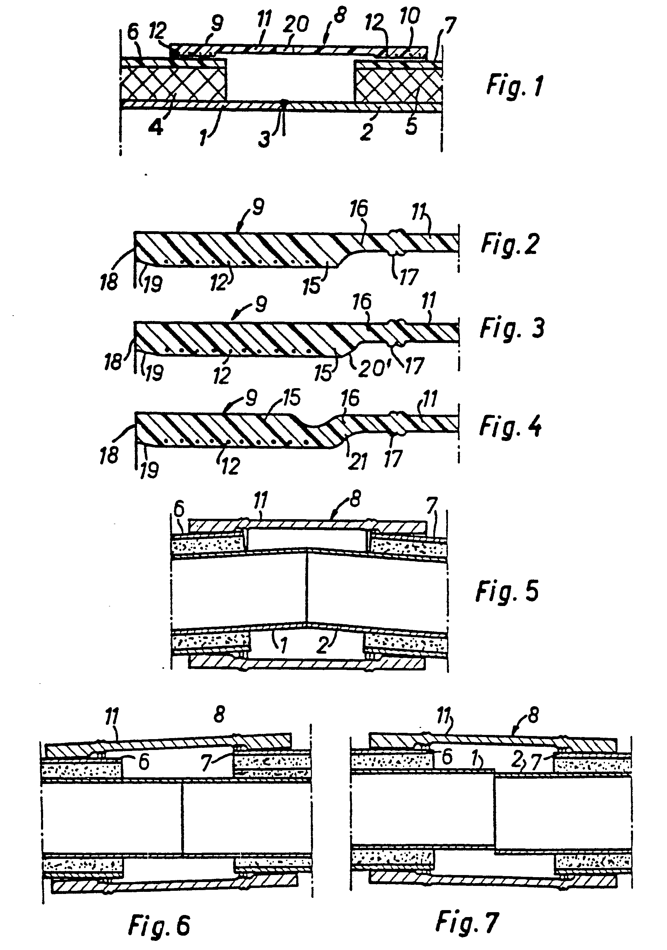

Die in Fig. 1 dargestellte Rohrverbindung für isolierte Rohre zeigt Mediumrohre, z.B. aus Metall oder Kunststoff, deren Enden 1, 2 durch eine Schweissung 3 miteinander verbunden sind. Eine Isolation 4, 5 liegt zwischen dem Mediumrohr und einem Mantelrohr aus Kunststoff mit Enden 6, 7. Vor dem Zusammenschweissen der Enden 1, 2 der Mediumrohre wird ein Verbindungsrohr 8 über das eine Mantelrohrende 6 bzw. 7 geschoben, das die Oeffnung zwischen den Mantelrohrenden 6, 7 abdeckt, wenn es nach durchgeführter Schweissung 3 in die in Fig. 1 dargestellte Lage geschoben wird.

Das Verbindungsrohr 8 weist zwei Randteile 9, 10 auf, die durch ein Zwischenrohrstück 11 miteinander verbunden sind. Zweckmässig werden die Randteile 9, 10 und das Zwischenrohrstück 11 getrennt hergestellt und dann miteinander verbunden, z.B. durch Spiegelschweissung.

Die beiden Randteile 9, 10 weisen in der Nähe ihrer Innenwandung eine in Windungen verlegte Heizdrahtwicklung 12 auf, die, wenn sie an eine elektrische Energiequelle angeschlossen ist, Wärme erzeugt, durch die die Innenwandung der Randteile 9, 10 und die Enden 6, 7 der Mantelrohre soweit zum Schmelzen gebracht werden, dass eine einwandfreie dichte Verbindung entsteht. Zweckmässig werden die beiden Randteile 9, 10 in nachgiebiger Weise miteinander verbunden, z.B. dadurch, dass das Zwischenrohrstück 11 eine geringere Wandstärke aufweist als die Wandstärke der Randteile 9, siehe Fig. 1.

Wie aus Fig. 2 - 4 ersichtlich ist, die nur den linken Randteil 9 und einen Teil des Zwischenrohrstückes 11 zeigen, können die Randteile verschieden ausgebildet sein.

Zweckmässig ist der Randteil 9 als Hülse 15 mit grösserer Wandstärke als das Zwischenrohrstück 11 ausgebildet, damit im Bereich der zu erfolgenden Schweissung das Verbindungsrohr 8 eine ausreichende Stabilität aufweist. Die Hülse 15 geht in eine Uebergangspartie 16 über, die etwa dieselbe Wandstärke aufweist wie das Zwischenrohrstück 11. Die Verbindung, z.B. eine Spiegelschweissung 17, erfolgt dann in einem Bereich, in dem die Randteile 9, 10 und das Zwischenrohrstück 11 etwa dieselbe Wandstärke aufweisen. Zum leichteren Verschieben des Verbindungsrohrs 8 weisen die Randteile 9, 10 an der dem Zwischenrohrstück 11 abgewandten Seite 18 eine Anschrägung 19 auf. In Fig. 3 ist zudem auch auf der dem Zwischenrohrstück 11 zugewandten Seite der Hülse 15 eine weitere Anschrägung 20' dargestellt.

Bei der Ausführungsform nach Fig. 4 ist zwischen der Hülse 15 und der Uebergangspartie 16 eine gewellte Partie 21 vorgesehen, um die Nachgiebigkeit des Verbindungsrohrs 8 zu vergrössern. Dass eine solche Nachgiebigkeit zweckmässig ist, zeigen die in Fig. 5 - 7 dargestellten Verbindungen. Sind die Enden 1, 2 der Mediumrohre nicht genau winklig abgelängt (Fig. 5), erfolgt die Schweissung bei abgewinkelten Rohren. Trotzdem kann das Verbindungsrohr 8 ohne Schwierigkeit über die Enden 6, 7 der Mantelrohre geschoben werden, wobei eine einwandfreie Verbindung wegen der grösseren Wandstärke der Hülse 15 gewährleistet ist.

Sind die Rohre exzentrisch, d.h. liegt mindestens ein Mantelrohr zu einem Mediumrohr exzentrisch, könnte das Verbindungsrohr 8 kaum über die Enden der Mantelrohre 6, 7 geschoben und verschweisst werden, wenn das Zwischenrohrstück 11 nicht nachgiebig ist (Fig. 6).

Aehnliches gilt auch, wenn die Enden 1, 2 der Mediumrohre zueinander verschoben sind, siehe Fig. 7. Auch in diesem Fall lässt sich das Verbindungsrohr 8 ohne Schwierigkeit über die Enden 6, 7 der Mantelrohre schieben und mit diesen verbinden. In den Figuren 1 und 5 - 7 ist der von dem Verbindungsrohr 8 begrenzte Raum zwischen der Isolation 4, 5 freigelassen. In Wirklichkeit wird jedoch die Isolation wieder angebracht, bevor das Verbindungsrohr 8 aufgeschoben und mit den Mantelrohrenden 6, 7 verbunden wird.

Die Partie 21 ist auch als wellrohrähnliche Ausbildung für mindestens einen Teil des Zwischenrohrstücks 11 anwendbar, etwa im Sinne eines Kompensationsrohrs bei Dampf- und Heisswasserleitungen, um ein einwandfreies Anliegen und Verschweissen der Randteile 9, 10 auf den Mantelrohrenden 6, 7 zu erreichen.

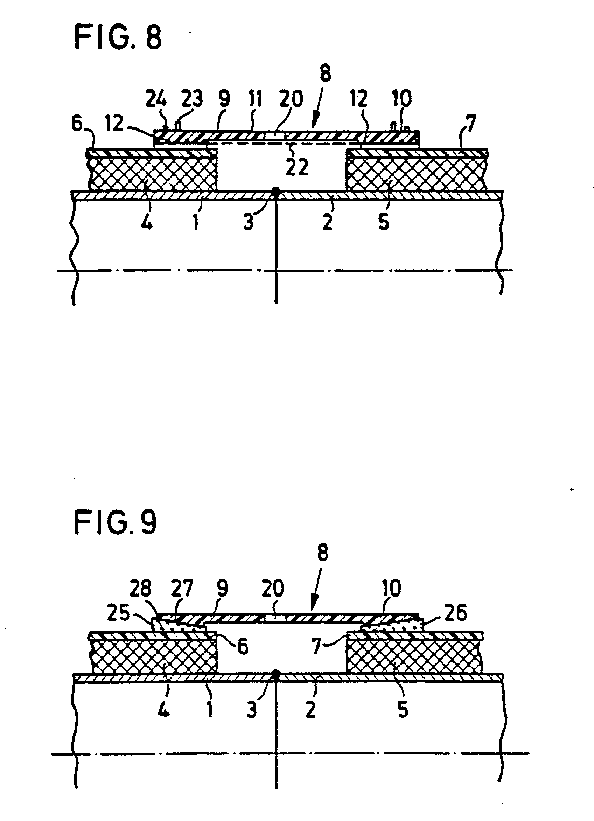

Bei der in Fig. 8 dargestellten Rohrverbindung werden zunächst die beiden Enden 1, 2 der Mediumrohre miteinander durch eine Schweissung 3 verbunden. Das Verbindungsrohr 8 ist gleich wie in Fig. 1 ausgebildet, und die beiden Randteile 9, 10 weisen ebenfalls in der Nähe ihrer Innenwandung die in Windungen verlegte Wicklung 12 auf. Die Zuverlässigkeit der Verbindung wird dadurch erhöht, dass beim Verbindungsrohr 8, das ebenfalls aus Kunststoff besteht, den beiden Randteilen 9, 10 durch Aufweiten eine Schrumpfspannung eingeprägt wird, die bei der Wärmeentwicklung im Widerstandsheizdraht gelöst wird, wodurch ein sattes Anliegen der beiden Randteile 9, 10 auf den Enden 6, 7 des Mantelrohrs erreicht wird.

Für die die Herstellung der Rohrverbindung nach Fig. 8 abschliessende Schweissung des Verbindungsrohrs 8 mit den Mantelrohrenden 6, 7 wird nicht der eine Randteil 9 und anschliessend der andere Randteil 10 mit dem entsprechenden Rohrende 6, 7 der Mantelrohre verschweisst, sondern die beiden Randteile 9, 10 werden gleichzeitig miteinander verschweisst. Hierzu werden die beiden Wicklungen 12 in den beiden Randteilen 9, 10 durch einen Verbindungsdraht 22 miteinander in Serie verbunden. Der Verbindungsdraht 22 kann hierbei entweder im Material des Zwischenrohrstücks 11 eingebettet sein oder sich längs der Innenwandung des Zwischenrohrstücks 11 erstrecken. Bei einer monofilen Wicklung genügt an den Randteilen 9, 10 je ein elektrischer Anschluss 24, z.B. ein Steckkontakt, an den die Klemmen der elektrischen Energiequelle befestigt werden. Zudem kann durch einen Indikatorstift 23 die Qualität der Schweissung festgestellt werden.

Bei der Rohrverbindung nach Fig. 9 wird auf die Mantelrohrenden 6, 7 je ein Schweissring 25, 26 aus einem Thermoplast geschoben, in dem Heizdrahtwicklungen 27, 28 zum Verschweissen der Mantelrohrenden 6, 7 und der Randteile 9, 10 eingebettet sind. Weist der Schweissring 25, 26 nur eine geringe Wandstärke auf, kann auch die Verschweissung der Mantelrohrenden 6, 7 mit den Randteilen 9, 10 mit einer einzigen Heizdrahtwicklung durchgeführt werden. Die Schweissringe 25, 26 werden mindestens einseitig konisch ausgebildet, so dass das Verbindungsrohr 8 satt aufgesteckt werden kann, das am Innenrand ebenfalls konisch sein kann. Zur Herstellung der Verbindung werden nach dem Aufstecken der Schweissringe 25, 26 und des Verbindungsrohrs 8 auf die Mantelrohre die Mediumrohre geschweisst, worauf die Ringe 25, 26 und das Verbindungsrohr 8 in die in Fig. 9 dargestellte Lage gebracht und mit dem Mantelrohr verschweisst werden.

Es ist auch möglich, die Enden 6, 7 der Mantelrohre am Aussenumfang mit einer Heizdrahtwicklung zu versehen, sei es, dass die Heizdrahtwicklung in das Mantelrohrende 6,7 eingebettet oder die Heizdrahtwicklung mit Hilfe eines Randteils am Mantelrohrende 6, 7, z.B. durch Spiegelschweissung, befestigt wird. Mit solchen Randteilen können etwaige vorhandene Toleranzen der Mantelrohre beim Verbinden des Verbindungsrohrs 8 ausgeschaltet werden. Wird zudem der Randteil am Aussenumfang konisch ausgebildet, kann ein sattes Anliegen der Enden des Verbindungsrohrs 8 und dadurch eine einwandfreie Verbindung erreicht werden.

Der Vorteil der beschriebenen Rohrverbindungen liegt darin, dass eine einwandfrei dichte Verbindung des Verbindungsrohrs 8 mit den Enden 6, 7 der Mantelrohre auch unter schwierigen Bedingungen, z.B. in einem Rohrgraben, erreicht werden kann. Wird zudem im Zwischenrohrstück 11 eine Oeffnung 20 vorgesehen, kann der Raum innerhalb des Verbindungsrohrs 8 mit Warmluft getrocknet und anschliessend ausgeschäumt werden. Die Verbindung ist dann fehlerfrei, gasund feuchtigkeitsdicht.

Die Mantelrohre, das Verbindungsrohr 8 und die Ringe 25, 26 sind z.B. aus Polyäthylen gefertigt, während die Isolation ein Kunststoff, z.B. ein Polyurethanschaum, oder ein organisches Material, z.B. Glaswolle, sein kann.

## Patentansprüche

1. Verfahren zum Verbinden von aus einem Thermoplast gefertigten Mantelrohren zweier isolierter Leitungselemente mittels eines Verbindungsrohres (8), dessen Randteile (9, 10) die Enden (6, 7) der Mantelrohre überragen, wobei das Verbindungsrohr (8) durch elektrische Widerstandsschweissung mit den Enden (6, 7) der Mantelrohre verbunden wird, dadurch gekennzeichnet, dass den Randteilen (9, 10) durch Aufweiten eine Schrumpfspannung eingeprägt wird, die bei Wärmeentwicklung während der Widerstandsschweissung gelöst wird, wodurch ein sattes Anliegen der beiden Randteile (9, 10) auf den Enden (6, 7) der Mantelrohre erreicht wird.

2. Verfahren nach Anspruch 1, dadurch gekennzeichnet, dass zwischen den Enden (6, 7) der Mantelrohre und den Randteilen (9, 10) des Verbindungsrohres (8) ein Schweissring (25, 26) aus einem Thermoplast mit einer elektrischen Widerstandsheizung, z.B. einer aus mit Abstand nebeneinanderliegenden Windungen bestehenden Widerstandsheizdrahtwicklung (27, 28), eingeschoben und dieser mit den Enden (6, 7) der Mantelrohre einerseits und den Randteilen (9, 10) des Verbindungsrohrs (8) andererseits verschweisst wird.

3. Verbindungsrohr zur Durchführung des Verfahrens nach Anspruch 1 oder 2, dadurch gekennzeichnet, dass das Verbindungsrohr (8) aus einem zwischen den Randteilen (9, 10) liegenden Zwischenrohrstück (11) besteht, welches mindestens teilweise eine geringere Wandstärke aufweist als die Randteile (9, 10).

4. Verbindungsrohr nach Anspruch 3, dadurch gekennzeichnet, dass mindestens ein Teil des Zwischenrohrstücks (11) wellrohrähnlich ausgebildet ist.

5. Verbindungsrohr nach Anspruch 3, dadurch gekennzeichnet, dass zwischen den Randteilen (9, 10) und dem Zwischenrohrstück (11) eine gewellte Uebergangspartie (21) angeordnet ist.

6. Verbindungsrohr nach einem der Ansprüche 3 - 5, dadurch gekennzeichnet, dass an dem Zwischenrohrstück (11) aus Thermoplast die Randteile (9, 10) mittels Spiegelschweissung befestigt sind.

7. Verbindungsrohr nach einem der Ansprüche 3 - 6, dadurch gekennzeichnet, dass zwischen den Enden (6, 7) der Mantelrohre und den Randteilen (9, 10) des Verbindungsrohres (8) ein Schweissring (25, 26) angeordnet ist, welcher konisch ausgebildet ist und die Widerstandsheizung (27, 28) in sich trägt.

## Claims

1. Process for providing a mantle tube connection across a joint between heat insulated pipes made of thermoplastics, with the ends (9,10) of a pipe section (8) extending over the ends (6,7) of the pipes, and the pipe section (8) is resistance welded to the ends (6,7) of the pipes, characterized in that the ends (9,10) of the pipe section (8) are provided with a shrinkage tension caused by expansion through heat development during the resistance welding, so that a close fit of both ends (9,10) of the pipe section (8) against the ends (6,7) of the pipes is guaranteed.

2. Process according to claim 1, characterized in that a welded ring (25,26) of thermoplastics, made by electric resistance welding, e.g. consisting of spaced turns of a heat resistance winding (27,28), is located between the ends (6,7) of the pipes and the ends (9,10) of the pipe section (8), and that this ring (25,26) is welded to the ends (6,7) of the pipes and the ends (9,10) of the pipe section (8).

3. Pipe section for performing the process defined in claim 1 or 2, characterized in that the pipe section (8) consists of an intermediate pipe (11) between the ends (9,10) of the section (8), which intermediate pipe (11) has at least partly a smaller wall thickness than the ends (9,10) of the section (8).

4. Pipe section according to claim 3, characterized in that at least a portion of the intermediate pipe (11) has the shape of a corrugated tube.

5. Pipe section according to claim 3, characterized in that an undulated transition portion (21) is located between the ends (9,10) of the section (8) and the intermediate pipe (11).

6. Pipe section according to one of the claims 3 to 5, characterized in that the section ends (9,10) are fastened onto the intermediate pipe (11) of thermoplastics by means of mirror welding.

7. Pipe section according to one of the claims 3 to 6, characterized in that a welded ring (25,26) is located between the ends (6,7) of the pipes and the ends (9,10) of the section (8), and that the ring (25,26) has a conic shape and is carrying the resistance welding (27,28) wihin itself.

## Revendications

1. Procédé pour raccorder des enveloppes tubulaires, en matière thermoplastique, de deux éléments de conduite isolés, au moyen d'un tube de raccord (8) dont les parties marginales (9,10) dépassent les extrémités (6,7) des enveloppes tubulaires, le tube de raccord (8) étant assemblé par soudage électrique par résistance aux extrémités (6,7) des enveloppes tubulaires, caractérisé en ce qu'on impose aux parties marginales (9,10), par élargissement une contrainte de retrait qui disparaît lors du dégagement de chaleur qui se produit lors du soudage électrique par résistance, ce qui assure un excellent contact des deux parties marginales (9,10) sur les extrémités (6,7) des enveloppes tubulaires.

2. Procédé selon la revendication 1, caractérisé en ce que le dispositif comporte, insérée entre les extrémités (6,7) des enveloppes tubulaires et les zones marginales (9,10) du tube de raccord (8), une bague de soudage (25,26) constituée par une matière thermoplastique et comportant un dispositif de chauffage par résistance électrique, par exemple un enroulement de fils chauffants par résistance constitué par des spirales placées les unes à côté des autres et à une certaine distance les unes des autres et en ce que cette bague est soudée d'une part aux extrémités (6,7) des enveloppes tubulaires et, d'autre part, aux parties marginales (9,10) du tube de raccord (8).

3. Tube de raccord pour l'application du procédé selon l'une des revendications 1 ou 2, caractérisé en ce que le tube de raccord (8) est constitué par une partie intermédiaire (11) qui est située entre les zones marginales (9,10) et qui, au moins dans certaines de ses parties, a une épaisseur de paroi inférieure à celle des zones marginales (9,10).

4. Tube de raccord selon la revendication 3, caractérisé en ce qu'une partie au moins de la partie tubulaire intermédiaire (11) a une forme analogue à un tube ondulé.

5. Tube de raccord selon la revendication 3, caractérisé en ce qu'entre les zones marginales (9,10) et la partie intermédiaire (11) il comporte une partie de transition (21) ondulée.

6. Tube de raccord selon l'une des revendications 3 à 5, caractérisé en ce qu'à la partie intermédiaire (11) en matière thermoplastique les zones marginales (9,10) sont fixées par soudage en bout par réflecteurs.

7. Tube de raccord selon l'une des revendications 3 à 6, caractérisé en ce qu'entre les extrémités (6,7) des enveloppes tubulaires et les parties marginales (9,10) du tube de raccord (8) le dispositif comprend une bague de soudage (25,26) qui a une forme conique et porte en elle-même le dispositif de chauffage par résistance (27, 28).

Fig. 1

Fig. 2

Fig. 3

Fig. 4

Fig. 5

Fig. 6

Fig. 7

# FIG. 8

# FIG. 9